# EUROPÄISCHE PATENTSCHRIFT

(11) **EP 0 648 710 B1**
(45) Veröffentlichungstag und Bekanntmachung des Hinweises auf die Patenterteilung: **31.03.1999**
(21) Anmeldenummer: 94202954.7
(22) Anmeldetag: 12.10.1994
(51) Int. Cl.: C01G 1/02, C01B 13/32, C01G 33/00, C01B 31/00, C04B 35/626

(54) **Verfahren zur Herstellung eines feinen monodispersen Oxidpulvers**
Process for the preparation of fine monodispersed oxide powders
Procédé de préparation de poudres fines monodispersées d'oxydes

(30) Priorität: 16.10.1993 DE 4335395
(43) Veröffentlichungstag der Anmeldung: 19.04.1995
(73) Patentinhaber: Philips Patentverwaltung GmbH, 22335 Hamburg (DE); Koninklijke Philips Electronics N.V., 5621 BA Eindhoven (NL)
(72) Erfinder: Hennings, Detlev, Dr., D-20097 Hamburg (DE); Waser, Rainer, Prof. Dr., D-20097 Hamburg (DE); Scharff, Peter, Priv.-Doz. Dr., D-20097 Hamburg (DE)
(74) Vertreter: Volmer, Georg, Dipl.-Ing.

(56) Entgegenhaltungen:
- WO-A-88/05427
- US-A- 4 749 664
- US-A- 4 885 120
- DATABASE WPI Derwent Publications Ltd., London, GB; AN 89-218111 & JP-A-1 157 456 (SUMITOMO ELEC IND)
- CHEMICAL ABSTRACTS, vol. 110, no. 2, 9. Januar 1989, Columbus, Ohio, US; abstract no. 14213y, KALUCKI Seite 397 ; & PL-A-141 907 (POLITECHNIKA SZCZECINSKA)
- PHYSICA, Bd. 105B, 1981, Seiten 9 - 16 E. STUMPP 'Chemistry of Graphite Intercalation Componds of the Acceptor Type'
- JOURNAL OF APPLIED CHEMISTRY, vol.2, no., 1952, page 557 - 562, R.C. CROFT 'THE SEPARATION OF THE ANHYDROUS CHLORIDES OF IRON AND ALUMINIUM BY FORMATION OF GRAPHITE COMPLEXES'
- W. SPRISSLER "Magnetochemische Untersuchungen an Graphit-Verbindungen mit einem Beitrag zur Chemie der Graphit-Fluorverbindungen", Dissertation Eberhard-Karls-Universität Tübingen, DE, 1960
- VESTNIK MOSKOVSKOGO UNIVERSITETA, SERIJA 2, KHIMIJA (DEUTSCHE KURZüBERSETZUNG), vol.25, no.1, 1984, page 98 - 103, V.A. MUCHANOV, V.V. AVDEEV, K.N. SEMENENKO 'ANLAGERUNG VON ELEMENTHALOGENIDEN IN GRAPHIT UNTER HOHEM DRUCK'
- P. SCHÖDERBÖCK "Beiträge zur Intercalationschemie von Graphit und turbostatischen Kohlenstoffen", Dissertation Ludwig-Maximilians-Universität München, DE, 1990
- ZEITSCHRIFT FüR ANORGANISCHE UND ALLGEMEINE CHEMIE, vol.397, no., 1973, LEIPZIG, DD page 179 - 186, A. BOECK, W. RDORFF 'METALLCHLORID-GRAPHITVERBINDUNGEN AUS NICHTWäSSRIGEN LöSUNGSMITTELN - EINLAGERUNGEN AUS THIONYLCHLORIDLöSUNGEN'
- SYNTHETIC METALS, vol.7, no., 1983, page 143 - 151, E. STUMPP, G. NIETFELD, K. STEINWEDE, K.D. WAGENRINGEL 'REACTION OF ANHYDROUS METAL NITRATES WITH GRAPHITE'
- CARBON '88 - PROCEEDINGS OF AN INTERNATIONAL CONFERENCE ON CARBON, vol., no., 18.09.1988, NEWCASTLE UPON TYNE, GB page 206 - 208, P. SCHARFF, E. STUMPP, H. MORITZ 'UPON THE REACTIONS OF NBCL5, TACL5 AND NBO(NO3)3 WITH GRAPHITE'
- CARBON '88 - PROCEEDINGS OF AN INTERNATIONAL CONFERENCE ON CARBON, vol., no., 18.09.1988, NEWCASTLE UPON TYNE, GB page 128 - 130, H.-J. HUMMEL, E. STUMPP 'THERMOGRAVIMETRIC ANALYSIS OF METAL NITRATE GRAPHITE INTERCALATION COMPOUNDS'
- PHYSICAL REVIEW B, vol.33, no.1, 1986, page 347 - , D.G. RANCOURT, C. MESCHI, S. FLANDROIS 'S = 1/2 ANTIFERROMAGNETIC FINITE CHAINS EFFECTIVELY ISOLATED BY FRUSTRATION: CUCL2-INTERCALATED GRAPHITE'
- NATURE, vol.168, no., 1951, page 32 - 33, R.C. CROFT, R.G. THOMAS 'LAMELLAR COMPOUNDS OF GRAPHITE WITH CHROMYL CHLORIDE AND CHROMYL FLUORIDE'
- ZEITSCHRIFT FüR ANORGANISCHE UND ALLGEMEINE CHEMIE, vol.279, no., 1955, LEIPZIG, DD page 192 - 193, W. RüDORFF, R. ZELLER 'ALUMINIUMCHLORID-GRAPHIT-EINLAGERUNGSVERBINDUN- GEN'
- ZEITSCHRIFT FüR ANORGANISCHE UND ALLGEMEINE CHEMIE, vol.293, no., 1958, LEIPZIG, DD page 328, 341 - 342, W. RüDORFF, A. LANDEL 'ÜBER DIE EINLAGERUNG VON GALLIUMCHLORID UND INDIUMCHLORID IN GRAPHIT'
- CARBON, vol.4, no., 1966, page 538 - , E. STUMPP, F. WERNER 'GRAPHITE INTERCALATION COMPOUNDS WITH CHLORIDES OF MANGANESE, NICKEL AND ZINC'
- E. STUMPP "Über Metallhalogenid-Graphitverbindungen und über die gaschromatographische Trennung von Metallchloriden an Graphit", Habilitationsschrift Universität Tübingen, DE, 1967
- CARBON, vol.14, no., 1976, page 89 - , E. STUMPP, A. TERLAN 'GRAPHITE LAMELLAR COMPOUNDS WITH MGCL2'
- ZEITSCHRIFT FüR ANORGANISCHE UND ALLGEMEINE CHEMIE, vol.428, no., 1977, LEIPZIG, DD page 269, 271 - , H. STAHL 'ZUR KENNTNIS DES EISEN-BROM-GRAPHIT-SYSTEMS'
- INORGANIC NUCLEAR CHEMISTRY LETTERS, vol.14, no., 1978, page 217 - 218, E. STUMPP, R. NIESS 'GRAPHITE LAMELLAR COMPOUNDS WITH URANIUM PENTABROMIDE'
- SYNTHETIC METALS, vol.3, no., 1981, page 1, 3 - , S. FLANDROIS, J.-M. MASSON, J.-C. ROUILLON, J. GAULTIER, C. HAUW 'INTERCALATION COMPOUNDS OF GRAPHITE WITH NICKEL CHLORIDE: SYNTHESIS, STRUCTURE, AND MECHANISM OF INTERCALATION'
- CARBON, vol.24, no.2, 1986, page 185 - 187, J.M. SKOWRONSKI 'THE DILUTE INTERCALATION COMPOUNDS OF GRAPHITE WITH CHROMIUM TRIOXIDE'
- M. HÖHNE "Über die Reaktion von Calcium, Strontium, Barium, Europium und Ytterbium mit Graphit in flüssigem Ammoniak", Dissertation Technische Universität Clausthal, DE, 1960

## Beschreibung

Die Erfindung betrifft ein Verfahren Zur Herstellung eines feinen, monodispersen Oxidpulvers der binären Oxide eines oder mehrerer Elemente aus den Gruppen Ib, IIa, IIb, IIIa, IIIb, IVa, IVb, Va, Vb, VIa, VIb, VIIb, VIII des periodischen Systems der Elemente sowie der Lanthaniden und Aktiniden.

Feine, monodisperse Oxidpulver werden zur Herstellung keramischer Zusammensetzungen für elektronische Keramik gebraucht. Feinheit, Größenverteilung und Reinheit der eingesetzen Pulverpartikel sind dabei entscheidende Parameter für die Reaktivität und Sinterbarkeit der Pulver. Dies gilt besonders für die Herstellung von miniaturisierten, elektronischen Bauelementen, z.B. keramische Kondensatoren, Varistoren oder Aktuatoren mit Vielschichtstruktur. Feine, monodisperse Pulver benötigt man aber auch zur Herstellung von Pasten für den Siebdruck von Keramikschichten in Dickfilmtechnik oder zur Aufbringung dünner Keramikschichten auf Substrate aus kolloidalen Suspensionen.

Besonders wenn nur kleine Mengen an Oxiden als Dotierungszusätze anderen Oxiden zugemischt werden sollen, sind die Partikelgröße und der Dispersions- bzw. Agglomerationsgrad der Pulver von ausschlaggebender Bedeutung für die homogene Verteilung der Dotierung im Basis-Material.

Es ist dem Fachmann seit langem bekannt, daß nur durch Einsatz feiner, monodisperser Pulver mit Korngrößen im Mikron- und Submikronbereich einwandfreie und reproduzierbare Dotierungen in elektronischen Keramiken erreicht werden können.

Die Herstellung feiner, monodisperser Oxidpulver mit den genannten Korngrößenwerten ist jedoch mit großen Schwierigkeiten verbunden. Beim Kalzinieren eines bekannten "Precursors" für Oxide, z.B. Carbonate, Oxalate, Hydroxide, oder beim Sprühtrocknen und Sprührösten von Lösungen, Solen und Gelen entstehen stets unregelmäßig geformte Aggregate von Partikeln, die sich aus zahlreichen Kristalliten zusammensetzen. Beim Zerkleinern derartiger Aggregate durch Mahlen erhält man Pulver mit breiter Verteilung der Partikel- bzw. Agglomeratgröße, die für Dotierungszwecke nicht sehr geeignet sind. Im Submikronbereich ist es auch nicht mehr möglich, durch Klassierung monodisperse Pulver zu erhalten. Darüber hinaus werden die Pulver beim Mahlen stets durch den Abrieb der Mahlkörper verunreinigt. Submikronpulver können deshalb nicht durch Zerkleinerung erhalten werden, sondern müssen durch direkte Verfahren hergestellt werden. Als direkte Verfahren sind z.B. die thermische Zersetzung im Plasma, Reaktionssprühsintern oder die Gasphasensynthese bekannt. Diese Fertigungstechnologien erfordern jedoch sehr aufwendige Fertigungsanlagen.

Aus "Chemistry of Graphite Intercalation compounds of the Acceptor Type", E. Stumpp, Physica 105B+C(1-3)S.9-16(1981) ist es bereits bekannt, daß man aus gemischten FeCl₃/YCl₃-Graphit-Interkalationsverbindungen durch simultane Verbrennung des Kohlenstoffs und Hydrolyse der Chloride die korrespondierenden Oxide als "layered oxides" erhält.

Weiterhin ist aus US 4,885,120 bekannt, keramische Metalloxidfasern herzustellen, indem man graphitische Graphitfasern mit einer Mischung aus Metallchloriden interkaliert und dann die interkalierten Fasern erhitzt, um sie zu oxidieren oder den Kohlenstoff zu verbrennen, wodurch man eine Metalloxidfaser erhält, die generell die Form und Struktur des Graphitfaserausgangsmaterials hat. Man stellt so Verbundfasern her, beispielsweise binäre Fasern aus Aluminiumoxid-Zirkoniumoxid oder Aluminiumoxid-Eisenoxid.

Es ist deshalb die Aufgabe der Erfindung, ein einfaches Verfahren zur Herstellung eines feinen, monodispersen Oxidpulvers der binären Oxide eines oder mehrerer der Elemente der Gruppen Ib, IIa, IIb, IIIa, IIIb, IVa, IVb, Va, Vb, VIa, VIb, VIIb, VIII des Periodischen Systems der Elemente sowie der Lanthaniden und Aktiniden anzugeben.

Diese Aufgabe wird erfindungsgemäß gelöst durch ein Verfahren, bei dem
- eine Graphit-Interkalationsverbindung durch Reaktion einer oder mehrerer chemischer Ausgangsverbindungen eines oder mehrerer der Elemente aus den Gruppen Ib, IIa, IIb, IIIa, IIIb, IVa, IVb, Va, Vb, VIa, VIb, VIIb, VIII des periodischen Systems der Elemente sowie der Lanthaniden und Aktiniden mit Flockengraphit mit einer Korngröße ≤ 50 µm (Siebfraktion) hergestellt wird und
- die Graphit-Interkalationsverbindung durch ein Oxidationsmittel bei 500°C bis 1000°C zum binären Oxid eines oder mehrerer der Elemente aus den Gruppen Ib, IIa, IIb, IIIa, IIIb, IVa, IVb, Va, Vb, VIa, VIb, VIIb, VIII des periodischen Systems der Elemente sowie der Lanthaniden und Aktiniden umgesetzt wird.

Dieses Verfahren hat den Vorteil, daß ein feines, monodisperses Oxidpulver der binären Oxide eines oder mehrerer Elemente der Gruppen Ib, IIa, IIb, IIIa, IIIb, IVa, IVb, Va, Vb, VIa, VIb, VIIb, VIII des Periodischen Systems der Elemente sowie der Lanthaniden und der Aktiniden in kleinen Ansätzen erhalten werden kann, ohne daß hohe Anlageninvestitionen notwendig sind. Das so erhaltene Oxidpulver ist von hoher Reinheit, sinteraktiv und hat eine gleichmäßige Korngrößenverteilung. Es wird ein besonders feines, monodisperses Oxidpulver mit einer Korngröße ≤ 0,75 ± 0,05 µm erhalten.

Nach einer bevorzugten Ausführungsform wird als Graphit-Interkalationsverbindung eine ternäre Graphit-Interkalationsverbindung zweier Elemente der Gruppen Ib, IIa, IIb, IIIa, IIIb, IVa, IVb, Va, Vb, VIa, VIb, VIIb, VIII des Periodischen Systems der Elemente sowie der Lanthaniden und Aktiniden verwendet. Auf diese Art und Weise läßt sich ein Oxidpulver herstellen, das eine extrem homogene Mischung zweier verschiedener, binärer Oxide der Elemente der Gruppen Ib, IIa, IIb, IIIa, IIIb, IVa, IVb, Va, Vb, VIa, VIb, VIIb, VIII des Periodischen Systems der Elemente sowie der Lanthaniden und der Aktiniden ist.

Es ist von Vorteil als mindestens eine Ausgangsverbindung ein Nitrat oder Oxynitrat eines oder mehrerer Elemente der Gruppen Ib, IIa, IIb, IIIa, IIIb, IVa, IVb, Va, Vb, VIa, VIb, VIIb, VIII des Periodischen Systems der Elemente sowie der Lanthaniden und der Aktiniden zu verwenden. Die Nitrat- oder Oxynitrat-Interkalationsverbindung läßt sich bei niedrigen Temperaturen zersetzen und es bleiben keine Rückstände in dem fertigen feinen, monodispersen Oxidpulver.

Nach einer besonders bevorzugten Ausführungsform ist das Verfahren dadurch gekennzeichnet, daß als Ausgangsverbindung Niob-Oxynitrat NbO(NO₃)₃ und als graphitische Kohlenstoffmodifikation Flockengraphit mit einer Korngröße ≤ 50µm (Siebfraktion) verwendet wird. Das so erhaltene Niobpentoxid fällt in einer Korngröße ≤ 1 ± 0,05 µm und kugelförmig an und läßt sich besonders leicht dispergieren.

Dieses Oxidpulver hat eine Partikelgröße ≤ 2 ± 0,10 µm, es ist wenig aggregiert und läßt sich leicht dispergieren.

Die Erfindung betrifft weiterhin eine keramische Zusammensetzung mit einem feinen, monodispersen Oxidpulver der binären Oxide eines oder mehrerer Elemente aus den Gruppen Ib, IIa, IIb, IIIa, IIIb, IVa, IVb, Va, Vb, VIa, VIb, VIIb, VIII des Periodischen Systems der Elemente sowie der Lanthaniden und Aktiniden nach der Erfindung, gegebenenfalls einem oder mehreren weiteren Oxiden und keramischen Hilfsstoffen.

Die weiteren Oxide können ebenfalls binäre Oxide, aber auch ternäre, quaternäre oder höher multiple Oxide sein. Eine derartige keramische Zusammensetzung hat eine hohe Sinteraktivität. Aufgrund der Feinheit und kugeligen Kornform der erfindungsgemäßen Oxidpulver wird wenig Bindemittel benötigt. Das erleichtert den Brennprozeß solcher keramischer Zusammensetzungen.

In einer weiteren bevorzugten Ausführungsform ist die keramische Zusammensetzung dadurch gekennzeichnet, daß sie als feines, monodisperses Oxidpulver Niobpentoxid, als weiteres Oxid Bariumtitanat sowie keramische Hilfsstoffe, z. B. Sinterhilfsmittel, Kornwachstumsinhibitoren und/oder permanente Binder enthält.

Eine solche keramische Zusammensetzung mit < 0,2 mol-% Nb₂O₅ (bezogen auf Nb), BaTiO₃ sowie keramische Hilfsstoffen ist besonders zur Herstellung eines PTC-Thermistors geeignet. Eine andere Zusammensetzung mit ≥ 0,5 mol-% Nb₂O₅ (bezogen auf Nb), BaTiO₃ sowie keramische Hilfsstoffe ist für die Herstellung einer hochisolierenden, dielektrischen Keramik besonders geeignet.

Im folgenden wird die Erfindung näher erläutert und es werden zwei Beispiele angegeben.

**"Graphit-Interkalationsverbindungen" (GIV)** sind Einlagerungsverbindungen von Fremdatomen, -molekülen oder -ionen in Graphit. Z.Zt. sind über 350 Graphit-Interkalationsverbindungen bekannt (vgl. Römpps Chemie-Lexikon. 8. Aufl., Band 2, 1542 (1981) Stuttgart.) Sie zeichnen sich dadurch aus, daß die Fremdatome, -moleküle oder -ionen in zum Teil stöchiometrischen Verhältnissen als Zwischenschicht zwischen die Kohlenstoffebenen des Graphitgitters eingelagert werden. Die Besetzungsdichte mit Fremdatomen, -molekülen oder -ionen in derartigen lamellaren Verbindungen kann je nach Anzahl von trennenden Kohlenstoffebenen verschieden groß sein.

Graphit-Interkalationsverbindungen sind z. B. von den Elementen Cu, Au, Be, Mg, Zn, Cd, Hg, Al, Ga, In, Tl, Si, Sn, Sb, Bi, Ti, Zr, Hf, Sb, Bi, V, Nb, Ta, Te, Cr, Mo, W, Mn, Re, Fe, Co, Ni, Pd, Pt, Sm, Eu, Gd, Tb, Dy, Ho, Er, Tm, Yb, Lu und U bzw. deren Verbindungen bekannt.

Zur Herstellung der Graphit-Interkalationsverbindung lagert man Verbindungen eines oder mehrerer Elemente aus den Gruppen Ib, IIa, IIB, IIIa, IIIb, IVa, IVb, Va, Vb, VIa, VIb, VIIb, VIII des Periodischen Systems der Elemente sowie der Lanthaniden und Aktiniden in eine hochgraphitische Kohlenstoffmodifikation ein. Diese Verbindungen können Fluoride, Chloride, Nitrate, Oxynitrate u.ä. sein.

Graphit-Interkalationsverbindungen aus Nitraten oder Oxinitraten zeigen gegenüber solchen aus Halogeniden ein günstigeres Abbrandverhalten. Aber auch die Verwendung von Halogeniden ist möglich. Nicht immer bildet ein Nitrat auch eine Graphit-Interkalationsverbindung, man ist hier auf die Elemente, die kovalente, wasserfreie Nitrate und Oxynitrate bilden, beschränkt.

In Tabelle 1 sind die Elemente angeführt, bei denen die Herstellung von Graphit-Interkalationsverbindung aus Nitraten oder Oxynitraten möglich ist und die sich erfindungsgemäß in ein feinkörniges Oxidpulver überführen lassen.

**TABELLE I**

| [ ]_{N} Nitrat; [ ]_{ON} = Oxynitrat |
|---|
| [Al]_{N} |
| [Ti]_{N} [V]_{ON} [Cr]_{ON} [Fe]_{N} [Co]N [Cu]_{N} [Zn]_{N} [Ga]_{N} [Ge]_{N} |
| [Zr]_{N} [Nb]_{ON} [Mo]_{ON} [Pd]_{N} [In]_{N} [Sn]_{N} |
| [Hf]_{N} [Ta]_{ON} [W]_{ON} [Re]_{ON} |

Zur Bildung von Gemischen zweier binärer Oxide sind ternäre Graphit-Interkalationsverbindungen notwendig. Ternäre Graphit-Interkalationsverbindungen sind entweder Co-Interkalationsverbindung mit gemischten Interkalatschichten oder Bi-Interkalationsverbindungen mit alternierender Interkalatschichtenfolge. Ternäre Craphit-Interkalationsverbindungen sind z.B. AlCl₃-FeCl₃-GIV, C_{8.52}CoCl₂ (NbF₅)_{0.89} und C₂₂CuAl₂Cl₈.

Ternäre Graphit-Interkalationsverbindungen können durch Co-Interkalation von Verbindungen zweier verschiedener Elemente in Graphit oder durch Ternärisierung einer binären Graphit-Interkalationsverbindung hergestellt werden.

Zur Interkalation werden hochorientierte graphitische Kohlenstoffmodifikationen benötigt. Im Rahmen der vorliegenden Erfindung wird als hochgraphitische Kohlenstoffmodifikation Flockengraphit, d.h. hochgereinigter Naturgraphit, mit einer Korngröße (Siebfraktion) ≤ 50 µm verwendet.

Es sind verschiedene Herstellungsverfahren zur Herstellung von Graphit-Interkalationsverbindungen bekannt, z.B. aus "Chemistry of Graphite Intercalation compounds of the Acceptor Type", E. Stumpp, Physica 105B+C(1-3)S.9-16(1981); Chloride-Fluoride-Graphite Ternary Compounds: Preparation and Characterization" A.Hamwi, A. Senhaji, D.Djurado und J.Dupuis, Proceedings of the 5th Carbon Conference Essen, 22.-26.June 1992, S.603-605 oder "Graphite Intercalation Compounds", H. Selig and L.B.Ebert, Advances in Inorganic Chemistry and Radiochemistry Vol.23, 281-237(1980) sowie J.E.Fischer, T.E. Thompson, Physics Today 36 (1978) u.ä.

Üblicherweise werden Halogenid-Graphit-Verbindungen durch Erhitzen von Graphit mit dem Halogenid in einer Chloratmosphäre in abgeschlossenen Ampullen hergestellt. Typische Temperaturen liegen zwischen 200 und 500° C. Zusatz kleiner Mengen von AlCl₃ kann die Reaktion sehr erleichtern, falls sich flüchtige Gasphasenkomplexe des Halogenids mit AlCl₃ bilden. Aber auch aus Lösung können Halogenide eingelagert werden. In erster Linie werden Lösungen in Thionylchlorid angewendet.

Zur Herstellung von Nitrat-Graphit-Interkalationsverbindungs ist es notwendig, zuerst die wasserfreien Nitrate oder Oxynitrate der Elemente herzustellen. Dies ist z.B. möglich durch Reaktion der Elemente mit in Ethylacetat gelöstem N₂O₄. Nach einem anderen bekannten Verfahren werden handelsübliche Chloride unter Luft- und Feuchtigkeitsausschluß in einem Schlenkrohr mit einem Überschuß von Stickstoffpentoxid (N₂O₅) mehrere Tage bei Zimmertemperatur stehen gelassen.

Zur Bildung der Nitrat-Graphit-Interkalationsverbindungen wird der Graphit mit einer Nitratschmelze, die das Nitrat des gewünschten Elementes enthält, unter Schutzgas in Kontakt gebracht.

Nach einem anderen Verfahren wird der Graphit unter Luft- und Feuchtigkeitsausschluß in einem Schlenkrohr mit einkondensiertem N₂O₅ als Dispergier- und Lösungsmittel verrührt und mit dem Nitrat oder Oxynitrat versetzt. Das Gemisch wird mehrere Tage bei erhöhter Temperatur unter Luft- und Feuchtigkeitsausschluß getempert. Durch eine Reaktion im Wirbelbett kann u.U. die Reaktion beschleunigt werden. Nach beendeter Reaktion wird das Produkt von überschüssigem N₂O₅ und Nitrat durch Waschen mit wasserfreiem Nitromethan gereinigt und getrocknet.

Zur Herstellung von Gemischen aus zwei binären Oxiden sind ternäre Graphit-Interkalationsverbindungen notwendig. Ternäre Graphit-Interkalationsverbindungen können Co-Interkalationsverbindungen sein, d.h. sie enthalten gemischte Interkalatschichten, oder Bi-Interkalationsverbindungen, d.h. sie enthalten alternierende Interkalatschichten. Ternäre Graphit-Interkalationsverbindungen sind z.B. AlCl₃-FeCl₃-GIV, C_{8.52}CoCl₂ (NbF₅)_{0.89} und C₂₂CuAl₂Cl₈ (Proceedings of the 5th International Carbon conference, Essen, 22. -26. June 1992, S.597-599, 603-605,638-640, Hrsg. Arbeitskreis Kohlenstoff der Deutschen Keramischen Gesellschaft).

Ternäre Graphit-Interkalationsverbindungen können durch gemeinsame Interkalation von Verbindungen zweier Elemente in Graphit oder durch Ternärisierung einer binären Graphit-Interkalationsverbindung hergestellt werden.

Durch Oxidation der Graphit-Interkalationsverbindung mit einem Oxidationsmittel bei möglichst niedrigen Abbrandtemperaturen wird sie erfindungsgemäß in ein feines, monodisperses Oxidpulver überführt.

Als Oxidationsmittel können sauerstoffhaltige Gase, z.B. Sauerstoff selbst, feuchter Sauerstoff oder Luft verwendet werden. Es können aber auch oxidierende Salzschmelzen wie z.B. geschmolzenes KNO₃ verwendet werden.

Die Abbrandtemperaturen der Graphit-Interkalationsverbindungen liegen bei 500°C - 1000°C. Die Graphit-Interkalationsverbindungen, die die bekannten Graphit-Oxidationskatalysatoren Vanadin oder Chrom enthalten, können bei niedrigeren Temperaturen oxidiert werden als diejenigen, die Oxidationsinhibitoren wie Silizium oder Aluminium enthalten.

Besonders schonend verläuft die Oxidation, wenn sie im Wirbelbett durchgeführt wird.

### 1. Ausführungsbeispiel:

Als Ausführungsbeispiel wurde die Herstellung von feinem monodispersen Niob-Pentoxid (Nb₂O₅) gewählt.

### 1.1. Herstellung von Niob-Oxynitrat

Handelsübliches Niobpentachlorid (NbCl₅) wird unter Luft- und Feuchtigkeitsausschluß in einem Schlenkrohr mit einem Überschuß von Stickstoffpentoxid (N₂O₅) mehrere Tage bei Zimmertemperatur stehen gelassen. Es bildet sich reinweißes NbO(NO₃)₃.

### 1.2. Herstellung der Niob-Oxynitrat-Graphitinterkalationsverbindung

Es wurde 1 g Flockengraphit mit einer mittleren Korngröße < 50 µm (Siebfraktion) unter Luft- und Feuchtigkeitsausschluß in einem Schlenkrohr mit einkondensiertem N₂O₅ (Stickstoffpentoxid) als Dispergier- und Lösungsmittel verrührt und mit 2,5 g NbO(NO₃)₃ versetzt. Das Gemisch wird 142 Stunden bei 60° C unter Luft- und Feuchtigkeitsausschluß getempert. Dabei findet die Einlagerungsreaktion des NbO(NO₃)₃ in den Graphit statt.

Nach beendeter Reaktion wird das Produkt von überschüssigem N₂O₅ und NbO(NO₃)₃ durch Waschen mit getrocknetem Nitromethan gereinigt und anschließend bei 110° C an Luft getrocknet.

### 1.3. Pyrohydrolyse zu Nb₂O₅

Ca. 1g der Graphitinterkalationsverbindung des NbO(NO₃)₃ werden in ein Quarzschiffchen gefüllt und im feuchten Sauerstoffstrom langsam mit ca. 3° C/min auf 300° C erwärmt und bei dieser Temperatur ca. 0,5 h gehalten. Dann wird die Temperatur innerhalb von 4 h auf 950° C bis 1000° C erhöht und 0,5 h bei Maximaltemperatur gehalten. Anschließend läßt man im trockenen Sauerstoffstrom auf Zimmertemperatur abkühlen.

Das so erhaltene Nb₂O₅ - Pulver besteht aus regelmäßig geformten, monodispersen, runden Partikeln mit einer mittlern Korngröße von 0,125 ± 0,02 µm. Es zeigt nur geringe Tendenz zur Agglomeration und läßt sich dementsprechend in wässriger Suspension leicht dispergieren.

### 2. Ausführungsbeispiel

### 2.1. Herstellung von [ C_{8.52} CoCl₂] (Nb F₅)_{0.89}

Es wird 1 g Flockengraphit mit einer mittleren Korngröße von 50 µm (Siebfraktion) unter Luft- und Feuchtigkeitsausschluß in einem Schlenkrohr mit einkondensiertem Cl₂ als Dispergier- und Lösungsmittel verrührt und mit 2,5 g CoCl₂ versetzt. Das Gemisch wird bei 500° C unter Luft- und Feuchtigkeitsausschluß getempert. Dabei findet die Einlagerungsreaktion des CoCl₂ in den Graphit statt.

Nach beendeter Reaktion wird das Produkt von überschüssigem CoCl₂ durch Waschen mit verdünnter HNO₃ und H₂O gereinigt und anschließend bei 110° C an Luft getrocknet.

### 2.2. Ternärisierung

Die so erhaltene binäre Graphit-Interkalationsverbindung C_{8.52}CoCl₂ wird zur Ternärisierung in einem horizontalen Reaktor mit Niobpulver gemischt und unter einem langsamen Strom von Fluor 10h bei 120°C gehalten. Es bildet sich intermediär NbF₅, das verdampft und biinterkaliert. Man erhält [C_{8.52}CoCl₂] (NbF₅)_{0.89}.

### 2.3. Oxidation

[C_{8.52}CoCl₂] (NbF₅)_{0.89} wird in demselben Reaktor anschließend im feuchten Sauerstoffstrom langsam mit ca. 3° C/min auf 300° C erwärmt und bei dieser Temperatur ca. 0,5 h gehalten. Dann wird die Temperatur innerhalb von 4 h auf 950° C bis 1000° C erhöht und 0,5 h bei Maximaltemperatur gehalten. Anschließend läßt man im trockenen Sauerstoffstrom auf Zimmertemperatur abkühlen.

Das so erhaltene Gemisch von CoO mit Nb₂O₅ enthält die beiden binären Oxide in homogener Verteilung. Die Primärkristallite bilden weiche, monodisperse Agglomerate mit einer durchschnittlichen Korngröße von 2 ± 0,05 µm.

## Patentansprüche

1. Verfahren zur Herstellung eines feinen, monodispersen Oxidpulvers der binären Oxiden eines oder mehrerer Elementen aus den Gruppen Ib, IIa, IIb, IIIa, IIIb, IVa, IVb, Va, Vb, VIa, VIb, VIIb, VIII des periodischen Systems der Elemente sowie der Lanthaniden und Aktiniden, wobei
- eine Graphit-Interkalationsverbindung durch Reaktion einer oder mehrerer chemischer Ausgangsverbindungen eines oder mehrerer der Elemente aus den Gruppen Ib, IIa, IIb, IIIa, IIIb, IVa, IVb, Va, Vb, VIa, VIb, VIIb, VIII des periodischen Systems der Elemente sowie der Lanthaniden und Aktiniden mit Flockengraphit mit einer Korngröße ≤ 50 µm hergestellt wird,
- die Graphit-Interkalationsverbindung durch ein Oxidationsmittel bei 500°C bis 1000°C zum binären Oxid eines oder mehrerer der Elemente aus den Gruppen Ib, IIa, IIb, IIIa, IIIb, IVa, IVb, Va, Vb, VIa, VIb, VIIb, VIII des periodischen Systems der Elemente sowie der Lanthaniden und Aktiniden umgesetzt wird.

2. Verfahren nach Anspruch 1,
dadurch gekennzeichnet,
daß als Graphit-Interkalationsverbindung eine ternäre Graphit-Interkalationsverbindung zweier Elemente aus den Gruppen Ib, IIa, IIb, IIIa, IIIb, IVa, IVb, Va, Vb, VIa, VIb, VIIb, VIII des periodischen Systems der Elemente sowie der Lanthaniden und Aktiniden verwendet wird.

3. Verfahren nach Anspruch 1 bis 2,
dadurch gekennzeichnet,
daß als mindestens eine Ausgangsverbindung ein Nitrat oder ein Oxynitrat eines oder mehrerer der Elemente aus den Gruppen Ib, IIa, IIb, IIIa, IIIb, IVa, IVb, Va, Vb, VIa, VIb, VIIb, VIII des periodischen Systems der Elemente sowie der Lanthaniden und Aktiniden verwendet wird.

4. Verfahren nach Anspruch 1 bis 3
dadurch gekennzeichnet,
daß als Ausgangsverbindung Nioboxynitrat NbO(NO₃)₃ verwendet wird.

## Claims

1. A method of manufacturing a fine, monodisperse oxide powder of the binary oxides of one or more elements of the groups Ib, IIa, IIb, IIIa, IIIb, IVa, IVb, Va, Vb, VIa, VIb, VIIb, VIII of the periodic system as well as of the lanthanides and actinides, in which
- a graphite intercalation compound is manufctured by reacting one or more chemical starting compounds of one or more elements of the groups Ib, IIa, IIb, IIIa, IIIb, IVa, IVb, Va, Vb, VIa, VIb, VIIb, VIII of the periodic system as well as of the lanthanides and actinides with a flake graphite having a grain size ≤ 50 µm,
- the graphite intercalation compound is converted by an oxidation agent at 500°C - 1000°C into a binary oxide of one or more elements of the groups Ib, IIa, IIb, IIIa, IIIb, IVa, IVb, Va, Vb, VIa, VIb, VIIb, VIII of the periodic system as well as of the lanthanides and actinides.

2. A method as claimed in Claim 1, characterized in that for the graphite intercalation compound use is made of a ternary graphite intercalation compound of two elements of the groups Ib, IIa, IIb, IIIa, IIIb, IVa, IVb, Va, Vb, VIa, VIb, VIIb, VIII of the periodic system as well as of the lanthanides and actinides.

3. A method as claimed in Claim 1 or 2, characterized in that at least one starting compound consists of a nitrate or oxynitrate of one or more elements of the groups Ib, IIa, IIb, IIIa, IIIb, IVa, IVb, Va, Vb, VIa, VIb, VIIb, VIII of the periodic system as well as of the lanthanides and actinides.

4. A method as claimed in Claims 1 to 3, characterized in that for the starting compound use is made of niobium oxynitrate NbO(NO₃)₃.

## Revendications

1. Procédé de fabrication d'une fine poudre d'oxyde monodispersée d'oxydes binaires d'un ou plusieurs éléments des groupes Ib, IIa, IIb, IIIa, IIIb, IVa, IVb, Va, Vb, VIa, VIb, VIIb, VIII du système périodique des éléments ainsi que des lanthanides et actinides. :
- un composé d'intercalation du graphite étant formé par réaction d'un ou plusieurs composés chimiques de départ d'un ou plusieurs des éléments des groupes Ib, IIa, IIb, IIIa, IIIb, IVa, IVb, Va, Vb, VIa, VIb, VIIb, VIII du système périodique des éléments ainsi que des lanthanides et actinides. avec un graphite en flocons d'un diamètre des particules ≤ 50 µm,
- un composé d'intercalation du graphite étant transformé par un agent d'oxydation à 500°C-1000°C en oxyde binaire d'un ou plusieurs des éléments des groupes Ib, IIa, IIb, IIIa, IIIb, IVa, IVb, Va, Vb, VIa, VIb, VIIb, VIII du système périodique des éléments ainsi que des lanthanides et actinides.

2. Procédé selon la revendication 1,
caractérisé en ce
qu'un composé ternaire d' intercalation du graphite de deux éléments des groupes Ib, IIa, IIb, IIIa, IIIb, IVa, IVb, Va, Vb, VIa, VIb, VIIb, VIII du système périodique des éléments ainsi que des lanthanides et actinides est utilisé comme composé d'intercalation du graphite.

3. Procédé selon l'une des revendications 1 à 2,
caractérisé en ce
qu'un nitrate ou un oxynitrate d'un ou plusieurs des éléments des groupes Ib, IIa, IIb, IIIa, IIIb, IVa, IVb, Va, Vb, VIa, VIb, VIIb, VIII du système périodique des éléments ainsi que des lanthanides et actinides est utilisé comme au moins un composé de départ.

4. Procédé selon l'une des revendications 1 à 3,
caractérisé en ce
que l'oxynitrate de niobium NbO(NO₃)₃ est utilisé comme composé de départ.
